# EUROPEAN PATENT APPLICATION

(11) **EP 3 130 571 A1**
(43) Date of publication of application: **15.02.2017**
(21) Application number: 16177018.5
(22) Date of filing: 29.06.2016
(51) Int. Cl.: C04B 28/10, C04B 28/32, C04B 111/00, C04B 111/70

(54) **A METHOD FOR MAKING A NATURAL BINDER FOR MANUFACTURING OF COMPOUND ARTICLES**

(30) Priority: 01.07.2015 IT UB20151818
(71) Applicant: Canti, Enrico, 61022 Vallefoglia Pesaro Urbino (IT)
(72) Inventor: Canti, Enrico, 61022 Vallefoglia Pesaro Urbino (IT)
(74) Representative: Bergamini, Silvio

(57) **Abstract**

The method of preparing a natural binder for use in manufacturing composite articles comprises: mixing a magnesium cement or Sorel cement, comprising caustic magnesia and a solution of magnesium chloride or magnesium sulfate, with a mixture of natural components reacting with one another and with fibers and aggregates imparting physical and mechanical properties; from such mixing step, obtaining a composite of cross-linked plastic materials which for waterproofing and protection of magnesium oxysulfate crystals obtained from a reaction of said magnesium cement, to an amount of 10% to 80% based on the dry magnesium oxide contents in the Sorel cement; the mixture of natural components comprising at least: a mixture of technical cardanol and a leachate obtained from demolition of cellulose; a terpenoid resin; a fluidizer selected from water or an epoxidized monounsaturated fatty acid or an eopoxidized polyunsaturated fatty acid.

## Description

### Field of the invention

The invention relates to a natural binder for use in manufacturing composite articles, a manufacturing method and composite articles that can be obtained with the method, which is generally designed for use in the building industry, but also in item manufacture in general.

### Background art

Composite articles, e.g. for the building industry, are known to be made from materials designed for use in extrusion machines, either for direct formation e.g. of profiled or drawn objects, or for filling molds in a fluid paste state, as is the case of thermosetting composite materials, such as glass or carbon fibers, inert fillers in a thermosetting matrix, that can be fluidized by heat.

This is the case, for instance, of fibers or inert fillers embedded in a thermosetting or thermoplastic resin matrix, with the former being cured by extended heating and the latter being solidified by cooling.

Other composite materials are known to be obtained by extrusion, such as those in which the inert fillers or the fibers are generally embedded in a cement matrix and are subjected to self-curing due to the cement hydration reaction or, alternatively, to slow dry-curing, like in the case of extruded clay items, with or without added fibers or inert fillers.

Composite materials are also known to be obtained with the fiberglass-reinforcement technique that is currently employed for building boats and other articles, using glass or carbon fibers or Kevlar or polypropylene fibers or natural fibers, with the glass fibers and the other fibers of different natures being dispersed in a jet of synthetic resins, such as unsaturated polyester and styrene monomer, or epoxies or others.

Substantially all prior art materials have the drawback of being oil derivatives and of requiring a considerable use of energy, possibly derived from fossil sources, in their manufacturing processes, as in the case of cement.

One exception is clay, which nevertheless has the drawback that, once it has hardened by drying, and possibly with fiber inclusions, it has very poor mechanical strength and an equally poor weather resistance, e.g. washout resistance.

All these extrudable materials are currently known to be used in automated fabrication of articles and objects, possibly having large sizes, using three-dimensional (3D) machines and an addition process, in which an extrusion head moves in space, under the control of a computer.

The head follows a preset program and successively deposits small layered portions of a fluid composite material which hardens due to heat-accelerated chemical reaction, as in the case of thermosetting materials or by cooling, as in the case of thermoplastic materials or by self-hardening due to the cement hydration reaction.

On the one hand, the use of thermoplastic materials to make articles and objects is substantially appropriate as these materials harden by cooling, and on the other hand considerable problems arise in the management of thermosetting materials and cement, due to their ability of being stored in the fluid phase.

Of particular interest is the use of unbaked clay in these 3D addition machines, due to the wide availability of this material in nature, in a state that needs no processing, and due to its water regulation and thermal inertia properties, as well as its heat insulating properties and its durability in the fluid state.

These properties make clay particularly suitable for use in building single-level houses, e.g. in developing countries with particular low-rainfall weather patterns, which prevent extended washout conditions that might affect its structural stability.

One object of the present invention is to provide an extrudable, self-hardening composite material, that can be maintained in the fluid state for a long time, for preparation of large portions of a ready-to-use mixture, that will quickly harden when exposed to heat and can impart physical and mechanical resistance properties allowing its use for construction of buildings, possibly on multiple levels, using 3D addition machines.

The binding matrix that forms the base of the novel composite consists of Sorel cement, or magnesium cement which, according to a NASA (US National Aeronautics and Space Administration) project, can be used for future construction of housing units on the moon, using a 3D addition system and employing moon sand as an additive filler.

Nevertheless, this prior art technique is not suitable for use on earth in building construction due to the well-known solubility of Sorel cement when exposed to washout, with hydrochloric acid and/or sulphuric acid being released therefrom, depending on whether a magnesium chloride or magnesium sulfate solution has been employed.

These will corrode any metal parts in contact therewith; particularly, the sulfate and the sulphuric acid will transform cement crystals into ettringite, which will lead to swelling and disintegration.

For this reason, Sorel cement has never been used in reinforced concrete casting, although it can be produced with low energy consumption, because its major component, i.e. magnesium oxide, is obtained by baking limestone at a temperature of 550-650°C, and due to the wide availability of magnesium chloride or magnesium sulfate salt in the sea.

One object of the invention is to provide a natural binder that will afford the construction of composite articles for use in any weather condition, and that can be used both in any region of earth and, if needed, in extra-terrestrial settlement projects, e.g. for quick, automated fabrication of housing stations and modules on the moon or other planets.

Another object of the present invention is to provide a natural binder that can allow the formation of a composite material suitable for spraying, as in fiberglass reinforced plastic application, and can be obtained from exclusively nature-derived materials, i.e. with no relation to the oil industry such that, when the articles or objects formed with these materials obtained from the binder of the invention reach the end-of-life, they may be disposed of in nature without causing pollution or any environmental impact.

The natural binder of the invention is obtained in accordance with the following example.

In order to make the Sorel cement suitable for the intended objects, i.e. to ensure its washout resistance and allow the formation of an appropriate mixture, that can be maintained in the fluid state during application, can ensure flowability in transport pipes and application by extrusion while being able to quickly solidify when exposed to heat stresses and bond on previously extruded and hardened surfaces, as in the case of 3D addition application for multi-level and monolithic building construction, such material is modified as follows:
during preparation, the Sorel cement, having a known ratio of magnesium oxide to chloride or magnesium sulfate solution, is added with certain amounts of the mixture as detailed below, i.e. 10% to 80% by wight based on the amount of magnesium oxide contained in the Sorel cement, preferably 40%.

More in detail, the mixture that is designed to modify the Sorel cement is composed of certain amounts of the elements as generally stated below, taken in variable amounts according to the physical and mechanical properties to be imparted to the final composite material:
- a mixture of technical cardanol and a plant-based enzymatic leachate;
- technical abietic (or technical agatic) acid;
- epoxidized monounsaturated or polyunsaturated fatty acids;
- added water;
- clay powder;
- fibers;
- inert fillers; (to be added after the essential elements for the binder, to obtain the composite material).

As mentioned above, the mixture may contain variable amounts of all the aforementioned elements, or some of them, provided that the technical cardanol, the plant-based enzymatic leachate and the technical abietic acid are always present in the mixture.

For example, a possible formulation of these elements may be related to the dry magnesium oxide content in the Sorel cement, in which the leachate-cardanol mixture is 10% to 40% and the terpenoid resin is 5% to 20%.

Particularly, the binder is composed of Sorel cement and the mixture of the necessary elements, whereas the composite material is obtained by further addition of fibers and inert fillers and aggregates to said mixture.

More in detail, the reactive groups of the phenol network contained in the humic and fulvic acids of the enzymatic leachate, as well as the hexose and pentose sugar groups bonded to the phenol chains of such fulvic and humic acids, combine with the abietic acid and the phenol group of cardanol, as well as with the unsaturated bonds of the long appendix of the carbon chain containing several unsaturated bonds of cardanol itself, thereby creating highly complex thermoset cures of phenoplasts and polyesters and plastic materials deriving from pentose and hexose sugars.

The enzymatic leachate, which also contains amino acids, is not only actively involved in crosslinking but also imparts water-solubility to cardanol, which would not otherwise be mixable in the preparation and would be hardly processable.

These plastic materials undergo thermoset curing parallel to the formation of the magnesium oxysulfate (or oxychloride) crystals of the Sorel cement, thereby closing the gaps between such crystals and wrapping and protecting them from washout.

The Sorel cement also provides the preparation with a strongly basic and reducing environment, which facilitates the cures.

All the building materials obtained heretofore with Sorel cement and with vegetable or mineral fibers have been only used for interiors or in gaps not exposed to water contact.

The creation of complex cures of plastic materials in the Sorel cement has the effect of protecting the oxysulfate crystals and enhances the binding power, thereby largely exceeding the physical and mechanical properties of the Sorel cement alone.

A test conducted on a composite material composed of Sorel cement modified with the mixture obtained according to the invention resulted in a compression resistance of about 250 N, ten times the resistance of an earthquake-proof concrete.

More in detail, the clay element may be preferably magnesium aluminum phyllosilicate (known under the trade name of Attapulgite) or calcium sodium aluminum phyllosilicate (known under the trade name of Bentonite).

The fiber element may be selected from linen, hemp, cotton, jute, Kenaf, bamboo, ramie, sisal, palm or any other type of fiber, also derived from recycled clothes and waste fabrics.

Alternatively, the fiber element may be also selected from animal wool, mineral wool, glass, carbon, Kevlar, polypopylene, polyester, nylon, etc.

The inert filler element may be selected from mineral inert fillers, such as silica sand, calcium carbonate, magnesite, talc, or wood flour or other inert fillers of any nature, possibly derived from recycled waste inert fillers.

The mixture element is composed of technical cardanol (comprising 90% cardanol as a major component, and cardol and methyl cardol as minor components in the remaining fraction) and a leachate obtained from demolition of cellulose (particularly of the bagasses remaining from sugarcane extraction), which is commonly employed in agriculture for protection and enhancement of fruit plants, on both leaves and roots and is mainly composed of a large percent of fulvic acids, a small percent of humic acids (polyphenol networks with highly reactive groups: wuinone, aldehyde, ketone acids), with a pH of about 4.5, mixed together in a ratio of 40% /49% technical Cardanol and 60%/51% plant-based leachate or any other different combination, provided that a grater amount of leachate is present to eliminate the strong, unpleasant odor of cardanol.

The technical abietic acid element comprises about 90% abietic acid, 10% neutral material composed of dihydroabietic acid and dehydroabietic acid), or alternatively agatic acid or other terpenoid resins.

The epoxidized mono- or polyunsaturated fatty acid element may be selected from epoxidized linseed oil, epoxidized soybean oil, epoxidized peanut oil, epoxidized rapeseed oil, or equivalents.

The water element is added to fluidize the mixture and impart flowability thereto.

Advantageously, the composite of the invention is not only suitable for application in the so-called 3D addition system, in fiberglass reinforcement, in shell-mold casting, in drawn product extrusion, but may be also used to obtain three-dimensional objects using open molds to be introduced in presses using an elastic membrane combined with vacuum, or vacuum combined with pressure above the elastic membrane and heat.

Thus, once a known amount of composite mixture has been introduced into a mold, manually or by a nozzle delivery machine, the mixture may be pressed by the elastic membrane due to the vacuum/pressure action, which will also facilitate air exhaust from the mixture.

Higher compaction pressures may be obtained by combining vacuum applied below the elastic membrane with pressure exerted above it, using, for instance, a pressurized fluid which, if heated, may apply the heat required for quick hardening of the composite.

If only vacuum below the membrane is used, hardening may be accelerated by applying heat through an IR source placed above the membrane and below the perforated support surface of the mold.

The invention can provide a technique for fast fabrication of articles such as doors, windows, shutters and an infinite number of commonly used objects, possibly having textures, i.e. high- and low-relief decorations, that can be used in developing countries, in technically developed countries, as well as in housing emergencies.

The invention also affords the provision of disposable formworks, possibly having decorative textures, made of wood stones or bricks, or designer objects, designed for use in the construction of buildings or prefabricated elements for buildings, as well as noise barriers, obtained by filling the formworks with the same composite material obtained according to the invention in a fluid state and by allowing it to harden in the next 24 hours at room temperature.

### EXAMPLES OF THE INVENTION

### Example 1.

The following formulation, e.g. mixed at 50% with Soral cement, based on the magnesium oxide content of the latter, without considering other components (e.g. magnesium sulfate or chloride, water), is particularly suitable for use in the creation of collectables and furniture:

| | |
|---|---|
| - Clay powder _________________________________ | 20%; |
| - Fibers ______________________________________ | 30%; |
| - Inert fillers (wood flour) ______________________ | 10%; |
| - Cardanol/Humic-Fulvic acid mixture ____________ | 20%; |
| - Abietic acid __________________________________ | 10%; |
| - Epoxidized polyunsaturated fatty acid __________ | 10%; |
| Total _________________________________________ | 100% |

### Example 2.

The following formulation, e.g. mixed at 50% with Soral cement, based on the magnesium oxide content of the latter, is particularly suitable in the construction of so-called "free-form" buildings:

| | |
|---|---|
| - Clay powder ______________________________ | 45%; |
| - Fibers ___________________________________ | 20%; |
| - Inert fillers ______________________________ | 5%; |
| - Cardanol/Hum.-Ful. acid mixture ___________ | 20%; |
| - Abietic acid ______________________________ | 10%; |
| Total ______________________________________ | 100% |

### Example 3.

The following formulation, e.g. mixed at 40% with Soral cement, based on the magnesium oxide content of the latter, is particularly suitable combined spraying with loose fibers or on randomly-oriented woven roving as used in fiberglass reinforcement:

| | |
|---|---|
| - Clay powder _____________________________________________ | 30%; |
| - (Very short) vegetable fibers ______________________________ | 10%; |
| - Inert fillers ______________________________________________ | 10%; |
| - Tech. cardanol and Hum./Ful. acid mixture __________________ | 30%; |
| - Abietic acid ______________________________________________ | 20%; |
| Total _____________________________________________________ | 100% |

### Example 4.

The following formulation, e.g. mixed at 50% with Sorel cement, based on the magnesium oxide content of the latter, is particularly suitable for use as a formwork-filling material, which is designed to harden at room temperature:

| | |
|---|---|
| - Clay powder_______________________________________________________ | 30%; |
| - Vegetable fibers____________________________________________________ | 55%; |
| - Tech. cardanol and plant-b. leachate_________________________________ | 10%; |
| - Abietic acid________________________________________________________ | 5%. |

The invention has been found to fulfill the intended objects, i.e. to allow the construction of monolithic elements for any environment using the composite material obtained from a modified Sorel binder and vegetable fibers, with the 3D addition technique or the fiberglass reinforcement technique, or in shell-mold casting, or drawn product extrusion, or conglomeration processes, which elements are totally unrelated to the oil industry, with the end-of-life disposal of such products involving no environmental impact, and possibly being preceded by crushing.

These products may be also employed to correct soil acidity or clay soils, by imparting indispensable nutrients for crops.

In the practical implementation of the invention all the elements may be replaced by equivalents without departure from the scope as defined by the following claims.

## Claims

1. A method for making a natural binder for manufacturing of compound articles comprising the steps of:
- To mix a magnesium cement or Sorel cement, comprising caustic magnesia and a solution of magnesium chloride or magnesium sulfate, with a mixture of natural components reciprocally reagent and with fibers giving mechanical and physical features;
- To obtain from this to mix a compound of cross-linked plastic materials which waterproof and envelope crystals of magnesium oxide-sulfate obtained from a reaction between said magnesium cement, in an amount between 10% and 80%, and a mixture of natural components in a basic environment;
**characterized in that** said mixture of natural components comprises at least the following components:
- A mixture between technical cardanol and a leachate obtained from demolition of cellulose;
- A technical torpenoid resin;
- A fluidizer selected among water or a epoxidized mono or poly unsaturated fatty acid.

2. The method as claimed in claim 1, wherein said mixture of technical cardanol and leachate is between 60% and 51% of leachate and between 40% and 49% of technical cardanol or other amounts with preponderance of leachate.

3. The method as claimed in claim 1, wherein said technical cardanol comprises a mixture between 90% of cardanol and 10% of methylcardol.

4. The method as claimed in claim 1, wherein said leachate comprises fulvic acids, humic acids.

5. The method as claimed in claim 1, wherein said technical torpenoid resin comprises a mixture among 90% of acetic acid and of 10% between dihydroabietic acid and dehydroabietic acid.

6. The method as claimed in claim 1, wherein said mixture of natural components further comprises:
- A powdered clay selected between attapulgite and bentonite;
- Fibers selected among vegetable fibers, animal fibers, rock fibers, syntetic fibers, glass fibers, carbon fibers, Kevlar fibers.

7. Use of a natural binder obtained according to one or more of preceding claims in an apparatus selected among three-dimensional printers, injection and/or shell molds, extruders, rotating molds, sprayers.

8. The use as claimed in claim 7, wherein said apparatus further comprises vacuum or pressurized press molds.

9. The use as claimed in claim 7, wherein said natural binder is included in conglomeration processes selected between continuous conglomeration processes or step-by-step conglomeration processes.
